(19) Europäisches Patentamt
European Patent Office
Office européen des brevets

(11) **EP 2 017 695 A1**

(12) **EUROPEAN PATENT APPLICATION**

(43) Date of publication:
**21.01.2009 Bulletin 2009/04**

(51) Int Cl.:
***G06F 3/02*** (2006.01)

(21) Application number: **07112472.1**

(22) Date of filing: **13.07.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(71) Applicant: **Research In Motion Limited
Waterloo, Ontario N2L 3W8 (CA)**

(72) Inventors:
• **Cort, Gary
  Conestogo Ontario N0B 1N0 (CA)**

• **Dara, Rozita
  Guelph Ontario N1C 1E9 (CA)**
• **Lee, John Jong
  Thornhill Ontario L4J 8G4 (CA)**
• **Nanad, Parul
  Brampton Ontario L6R 3E4 (CA)**

(74) Representative: **Roberts, Gwilym Vaughan
Kilburn & Strode
20 Red Lion Street
London WC1R 4PJ (GB)**

(54) **Character value arrangement on a handheld keypad**

(57) A method of determining character value arrangement on a handheld keypad includes: specifying one or more parameters for evaluating keypad solutions for the handheld keypad by characterizing a user's physical operations on the handheld keypad; generating an initial set of keypad solutions for the handheld keypad; evaluating a fitness of the keypad solutions in the initial set based on the one or more parameters; selecting a first set of keypad solutions from the initial set based on the fitness of the keypad solutions in the initial set; generating additional solutions for the first set of keypad solutions from the keypad solutions in the first set; evaluating the fitness of the additional keypad solutions in the first set; and saving at least some key-associated character values based on the keypad solutions. The keypad includes input keys with which character values are associated, each having at least one alphanumeric indicia associated therewith.

**Description**

BACKGROUND

**Field**

The present disclosure relates to computing generally and more particularly to determining an improved character arrangement for a handheld keypad.

**Description of Related Art**

Traditionally, the keypad character arrangements for handheld devices have been based on the traditional QWERTY keyboard. Conventionally, this QWERTY keypad has been sub-optimized for ten-finger typing. However, handheld keypads are generally used with a limited number of fingers, and hence, the traditional arrangement may be inefficient or ineffective. For example, frequent characters such as "a" and "o" are located near the edge of the keypad, which may require unnecessary and potentially harmful movement to access them, increasing the time to type a message. Furthermore, ergonomic considerations have generally not been taken into consideration in the design process. Similarly usability criteria (e.g., based on user evaluations for efficiency, effectiveness and satisfaction) are generally not considered.

Thus, there is a need for improved character value arrangement on a handheld keypad.

BRIEF DESCRIPTION OF THE DRAWINGS

Figure 1 shows an exemplary method for determining character value arrangement according to an embodiment of the present disclosure.
Figure 2 shows an exemplary constrained optimization for the embodiment of Figure 1.
Figure 3 shows an exemplary unconstrained optimization for the embodiment of Figure 1.
Figure 4 shows an exemplary array representation of a keypad solution representation for the embodiment of Figure 1.
Figure 5 shows an exemplary unconstrained keypad solution for the embodiment of Figure 1.
Figure 6 shows an exemplary constrained keypad solution for the embodiment of Figure 1.
Figure 7 shows an exemplary mutation operation for the embodiment of Figure 1.
Figure 8 shows an exemplary random crossover operation for the embodiment of Figure 1.
Figure 9 shows an exemplary block diagram for implementation of the disclosed method on a computer system.
Figure 10 illustrates a handheld electronic device configured according to the present teachings cradled in the palm of a user's hand.
Figure 11 is a block diagram representing a wireless handheld communication device interacting in a communication network.

DETAILED DESCRIPTION

**Overview of a Representative Device**

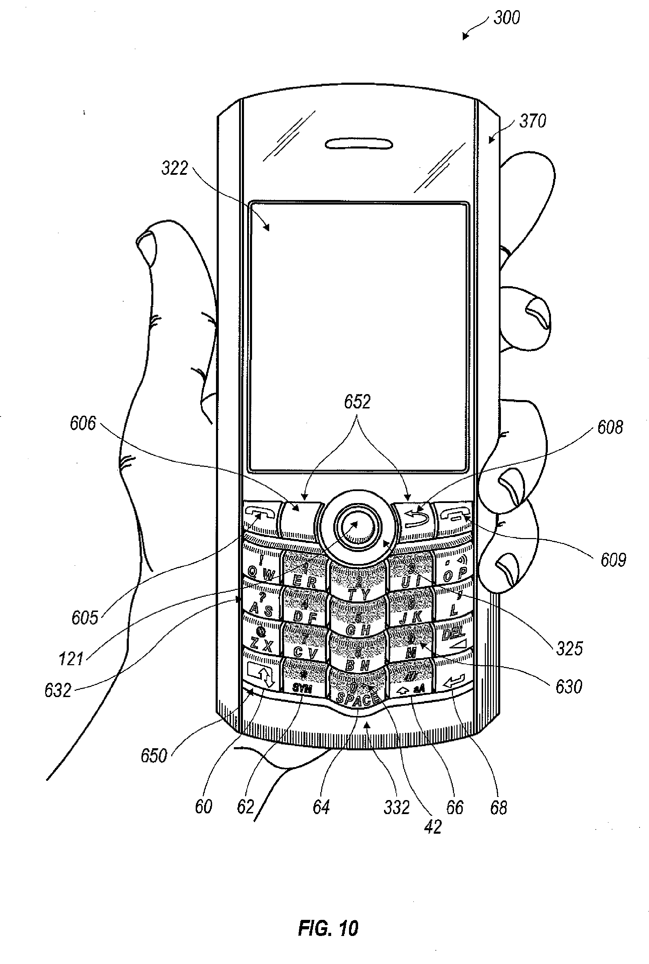

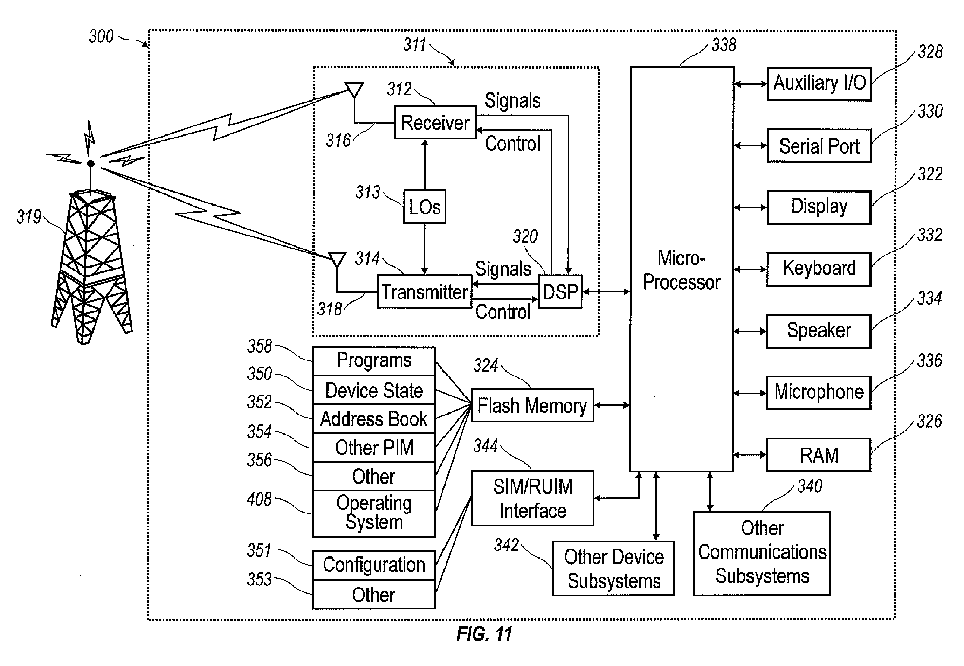

In general, as used herein, the term "handheld electronic device" 300 describes a relatively small device that is capable of being held in a user's hand. It is a broad term that includes devices that are further classified as handheld communication devices, which interact with communication networks 319 (Figures 10 and 11).
When cooperating in a communications network 319 as depicted in FIG. 11, the handheld device 300 wirelessly transmits data to and receives data from a communication network 319 utilizing radio frequency signals. Preferably, the data transmitted between the handheld device 300 and the communication network 319 supports voice and textual messaging.
As may be appreciated from FIG. 10, the handheld electronic device 300 comprises a display 322 located above a keyboard 332 suitable for accommodating textual input to the handheld electronic device 300 when in an operable configuration. As shown, the handheld electronic device 300 is of unibody construction, but it is also contemplated that the handheld electronic device 300 may be of an alternative construction such as that commonly known as "clamshell" or "flip-phone" style. Regardless, in the operable configuration of the handheld electronic device 300, an auxiliary input 328, such as a navigational tool, may be located essentially between the display 322 and the keyboard 332. Examples and details regarding exemplary navigational tools are provided below.
In one embodiment, the keyboard 332 comprises a plurality of keys with which alphabetic letters are associated on a one-letter-per-key basis. It is contemplated that the keys may be directly marked with letters, or the letters may be presented adjacent to the keys but with each letter clearly in association with a particular key. In order to facilitate user input, the alphabetic letters are preferably configured in a familiar QWERTY, QWERTZ, AZERTY, or Dvorak layout, each of which is also discussed in greater detail hereinbelow.

In an alternative configuration, the keyboard 332 comprises a plurality of keys with which alphabetic letters are also associated, but at least a portion of the individual keys have multiple letters associated therewith. This type of configuration is referred to as a reduced keyboard (in comparison to the full keyboard described immediately above) and can, among others, come in QWERTY, QWERTZ, AZERTY, and Dvorak layouts.

Handheld electronic devices 300 that include a combined text-entry keyboard and a telephony keyboard are also known. Examples of such mobile communication devices include mobile stations, cellular telephones, wireless personal digital assistants (PDAs), two-way paging devices, and others. Various keyboards are used with such devices depending in part on the physical size of the handheld electronic device 300. Some of these are termed full keyboard, reduced keyboard, and phone key pads.

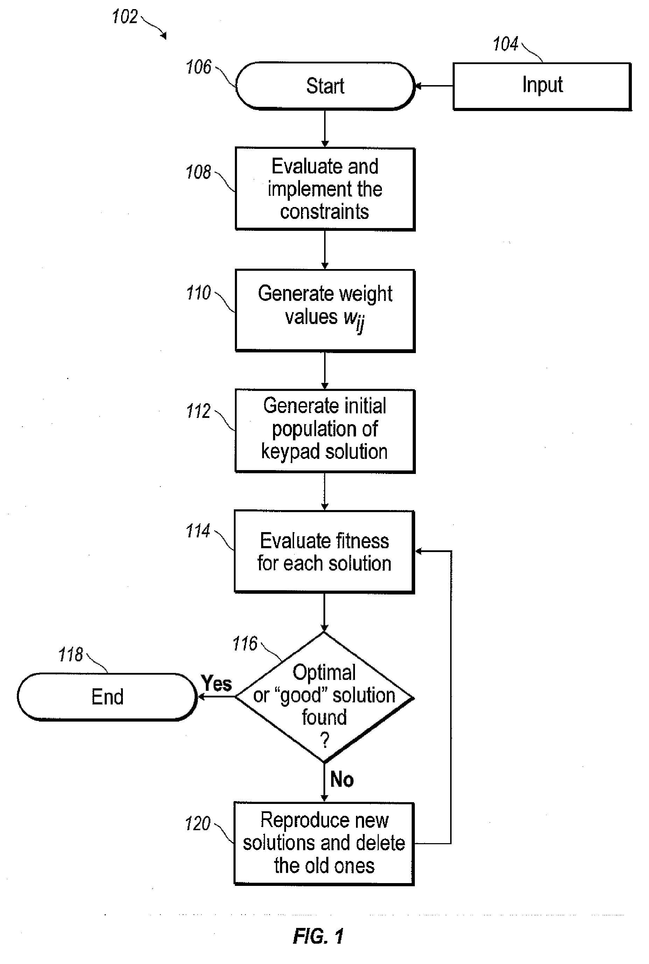

An examplary embodiment of the handheld electronic device 300 as shown in FIG. 10 is cradleable in the palm of a user's hand. The size of the device 300 is such that a user is capable of operating the device 300 using the same hand that is holding the device 300. In a preferred embodiment, the user is capable of actuating all features of the device 300 using the thumb of the cradling hand, while in other embodiments, features may require the use of more than just the thumb of the cradling hand. The preferred embodiment of the handheld device 300 features a keyboard 332 on the face of the device 300, which is actuable by the thumb of the hand cradling the device 300. The user may also hold the device 300 in such a manner to enable two thumb typing on the device 300. Furthermore, the user may use fingers rather than thumbs to actuate the keys on the device 300. In order to accommodate palm-cradling of the device 300 by the average person, the device is preferably longer (height as shown in FIG. 1) than it is wide, and the width is preferably between approximately fifty and seventy-six millimeters (two and three inches), but by no means limited to such dimensions.

The handheld electronic device 300 includes an input portion and an output display portion. The output display portion can be a display screen 322, such as an LCD or other similar display device.

The block diagram of FIG. 11 representing the device 300 interacting in the communication network 319 shows the device's inclusion of a microprocessor 338 which controls the operation of the device 300. The communication subsystem 311 performs all communication transmission and reception with the wireless network 319. The microprocessor 338 further connects with an auxiliary input/output (I/O) subsystem 328 (e.g., trackball assembly or thumbwheel assembly), a serial port (preferably a Universal Serial Bus port) 330, a display 322, a keyboard 332, a speaker 334, a microphone 336, random access memory (RAM) 326, and flash memory 324. Other communications subsystems 340 and other device subsystems 342 are generally indicated as connected to the microprocessor 338 as well. An example of a communication subsystem 340 is a short-range communication subsystem such as BLUETOOTH® communication module or a Wi-Fi communication module (a communication module in compliance with IEEE 802.11b) and associated circuits and components. Additionally, the microprocessor 338 is able to perform operating system functions and preferably enables execution of software applications on the handheld device 300.

The included auxiliary I/O subsystem 328 can take the form of a variety of different navigation tools (multidirectional or single directional) such as a trackball navigational tool 325 (as shown in FIG. 10), a thumbwheel, a navigation pad, or a joystick, just as examples. These navigation tools are preferably located on the front surface of the device 300 but may be located on any exterior surface of the device 300. Other auxiliary I/O devices can include external display devices and externally connected keyboards (not shown). While the above examples have been provided in relation to the auxiliary I/O subsystem 328, other subsystems capable of providing input or receiving output from the handheld electronic device 300 are considered within the scope of this disclosure. Additionally, other keys may be placed along the side of the device 300 to function as escape keys, volume control keys, scrolling keys, power switches, or user programmable keys, and may likewise be programmed accordingly.

In a preferred embodiment, the handheld device 300 is designed to wirelessly connect with a communication network 319. Some communication networks that the handheld device 300 may be designed to operate on require a subscriber identity module (SIM) or removable user identity module (RUIM). Thus, a device 300 intended to operate on such a system will include SIM/RUIM interface 344 into which the SIM/RUIM card (not shown) may be placed. The SIM/RUIM interface 344 can be one in which the SIM/RUIM card is inserted and ejected.

In an examplary embodiment, the flash memory 324 is enabled to provide a storage location for the operating system, device programs, and data. While the operating system in a preferred embodiment is stored in flash memory 324, the operating system in other embodiments is stored in read-only memory (ROM) or similar storage element (not shown). As those skilled in the art will appreciate, the operating system, device application, or parts thereof may be loaded in RAM 326 or other volatile memory.

Furthermore, the device is equipped with components to enable operation of various programs, as shown in FIG. 11. In an exemplary embodiment, the flash memory 324 is enabled to provide a storage location for the operating system, device programs 358, and data. The operating system is generally configured to manage other application programs 358 that are also stored in memory 324 and executable on the processor 338. The operating system honors requests for services made by application programs 358 through predefined application program 358 interfaces. More specifically, the operating system typically determines the order in which multiple applications 358 executed on the processor 338 and the execution time allotted for each application 358, manages the sharing of memory 324 among multiple applications 358, handles input and output to and from other device subsystems 342, and so on. In addition, users can typically interact directly with the operating system through a user interface usually including the keyboard 332 and display screen 322. While the operating system in a preferred embodiment is stored in flash memory 324, the operating system in other embodiments is stored in read-only memory (ROM) or similar storage element (not shown). As those skilled in the art will appreciate, the operating system, device application 358 or parts thereof may be loaded in RAM 326 or other volatile memory.

In a preferred embodiment, the flash memory 324 contains programs/applications 358 for execution on the device 300 including an address book 352, a personal information manager (PIM) 354, and the device state 350. Furthermore, programs 358 and other information 356 including data can be segregated upon storage in the flash memory 324 of the device 300.

When the device 300 is enabled for two-way communication within the wireless communication network 319, it can send and receive signals from a mobile communication service. Examples of communication systems enabled for two-way communication include, but are not limited to, the GPRS (General Packet Radio Service) network, the UMTS (Universal Mobile Telecommunication Service) network, the EDGE (Enhanced Data for Global Evolution) network, and the CDMA (Code Division Multiple Access) network and those networks, generally described as packet-switched, narrowband, data-only technologies which are mainly used for short burst wireless data transfer. For the systems listed above, the handheld device 300 must be properly enabled to transmit and receive signals from the communication network 319. Other systems may not require such identifying information. GPRS, UMTS, and EDGE require the use of a SIM (Subscriber Identity Module) in order to allow communication with the communication network 319. Likewise, most CDMA systems require the use of a RUIM (Removable Identity Module) in order to communicate with the CDMA network. The RUIM and SIM card can be used in multiple different handheld devices 300. The handheld device 300 may be able to operate some features without a SIM/RUIM card, but it will not be able to communicate with the network 319. A SIM/RUIM interface 344 located within the device 300 allows for removal or insertion of a SIM/RUIM card (not shown). The SIM/RUIM card features memory and holds key configurations 351, and other information 353 such as identification and subscriber related information. With a properly enabled handheld device 300, two-way communication between the handheld device 300 and communication network 319 is possible.

If the handheld device 300 is enabled as described above or the communication network 319 does not require such enablement, the two-way communication enabled device 300 is able to both transmit and receive information from the communication network 319. The transfer of communication can be from the device 300 or to the device 300. In order to communicate with the communication network 319, the device 300 in a preferred embodiment is equipped with an integral or internal antenna 318 for transmitting signals to the communication network 319. Likewise the handheld device 300 in the preferred embodiment is equipped with another antenna 316 for receiving communication from the communication network 319. These antennae (316, 318) in another preferred embodiment are combined into a single antenna (not shown). As one skilled in the art would appreciate, the antenna or antennae (316, 318) in another embodiment are externally mounted on the device 300.

When equipped for two-way communication, the handheld device 300 features a communication subsystem 311. As is well known in the art, this communication subsystem 311 is modified so that it can support the operational needs of the device 300. The subsystem 311 includes a transmitter 314 and receiver 312 including the associated antenna or antennae (316, 318) as described above, local oscillators (LOs) 313, and a processing module 320 which in a preferred embodiment is a digital signal processor (DSP) 320.

It is contemplated that communication by the device 300 with the wireless network 319 can be any type of communication that both the wireless network 319 and device 300 are enabled to transmit, receive and process. In general, these can be classified as voice and data. Voice communication is communication in which signals for audible sounds are transmitted by the device 300 through the communication network 319. Data is all other types of communication that the device 300 is capable of performing within the constraints of the wireless network 319.

## Character Selection for a Keypad on a Handheld Device

For a handheld device as exemplified by the above description, a method and arrangement for determining locations for characters on the keys are presented herein. In the past, designers have generally used user performance evaluations to determine the appropriate layout along with other design considerations. As described herein, determination and selection of the characters for the keys is implemented using particular constraints and other ergonomic performance criteria.

An embodiment of the present disclosure is shown in Figure 1. A method 102 for determining a character value arrangement on a handheld keypad includes specifying inputs that may include the geometry of the keypad and rules or constraints for optimizing (e.g., improving) ergonomic performance 104. At the start of the process 106, the constraints are implemented 108 so that the generated solutions satisfy the constraints. Examples of constraints that can be imposed on the solutions is described herein below. Weight values $w_{ij}$ (or more generally parameters) are generated 110 to evaluate the fitness of a candidate keypad solution. Next an initial population (or set) of keypad solutions is generated 112 and each solution is evaluated for its fitness 114. If at least one solution satisfies an optimality criterion for acceptable performance 116, the process can be terminated 118. Otherwise, less desirable solutions are discarded and additional solutions are generated 120, and the process continues 114 until termination 118.

Depending on the requirements of the operational setting, the process 102 can be terminated 118 even if the optimality (or acceptability) criterion has not been satisfied 116. Termination criteria may, for example, include reaching a fixed number of loop iterations or solution generations or reaching a plateau with the highest ranking solution so that successive iterations no longer produce better results. Additionally, a user may terminate the process 118 after direct inspection of the highest ranking solutions.

At least some values based on the results of the method can be saved for subsequent use. For example the optimal keypad solution can be saved directly for application as in keypad design. Alternatively, some derivative or summary form of the results (e.g., averages, interpolations, etc.) can be saved for later use according to the requirements of the operational setting. Additional details related to the method 102 are given below.

**Constraints**

Constraints or rules provide limitations on the generation of solutions and additional solutions determined according to the method of optimization of the layout as described herein. The constraints include user based rules that require certain elements to be present in any solution generated. For the above-described method 102 the constraints 108 may include a variety of examples consistent with these considerations. For example, according to one constraint, each key can contain only one alphabetic character, and two alphabetic characters are not allowed on one key. According to another constraint, the number of characters on one key cannot exceed three. According to another constraint, each alphabetic character and each symbol should be used only once and no duplication is allowed. According to another constraint, Space, Alt, Shift and Sym should each be assigned to one key individually. According to another constraint, the locations of Space, Alt, Shift and Sym keys are predefined and cannot be changed during the optimization.

Additional constraints may be placed on the optimized layout solution that further restrict or limit the acceptable key layouts. For example in one embodiment, the key layout can be limited to a QWERTY or other known standard key layout as described herein. A keypad solution that was so constrained would require that the alphabetic character be positioned on the keys such that the alphabetic layout of the keys was in a standard keypad layout, such as QWERTY. Additionally, the layout for the number characters can likewise be constrained such that the numbers appear oriented in a telephone key layout or "ten-key" layout as desired. Furthermore, the location of particular function keys might be constrained such that the return/enter key, delete, backspace, and space key are located on certain keys. The above described constraints provide some examples of typical constraints that might be placed on the keypad solution. In some embodiments, more than one of the constraints may be implemented simultaneously, while in other embodiments on a single constraint is used. Additional constraints might be placed on the particular solution depending upon the solution technique implemented.

**Generating Initial Keypad Solutions**

The generation scheme of initial solutions 112 is designed in such a way that it is capable of both constrained and unconstrained optimization. In the constrained optimization, the solution space is minimized to the predefined constraints.

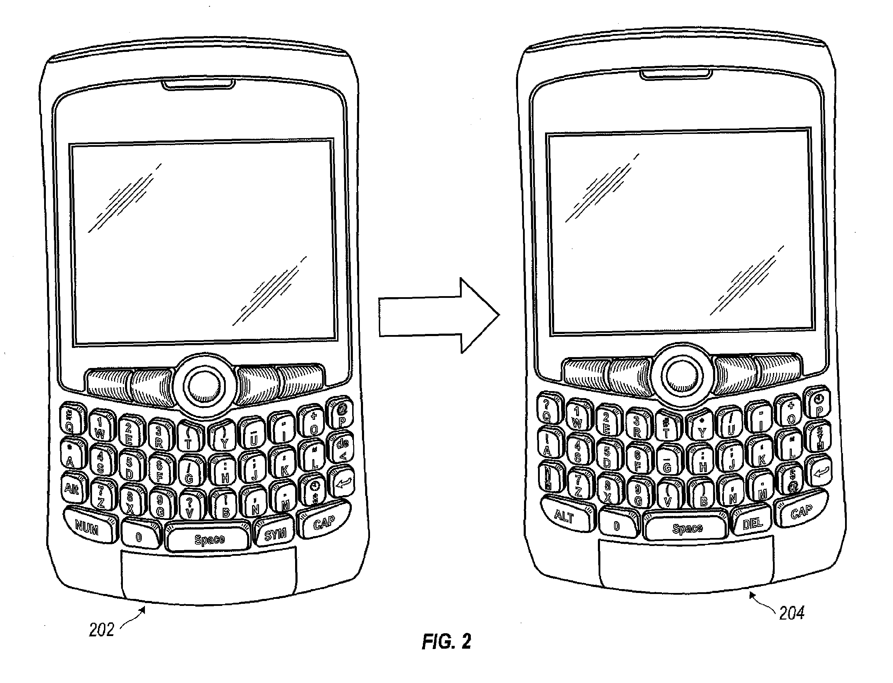

An example of such constraint on the handheld is QWERTY arrangement or location of the numbers on the keypad, where the algorithm parameters can be set such that these locations on the keypad are preserved. Figure 2 shows an exemplary keypad layout 202 for a handheld electronic device. In a constrained optimization of the keypad 202, the alphabets and the numbers have been assigned the same location. However, location of other keys such as ALT, NUM, and keys with special characters (symbols), punctuation marks has been altered.

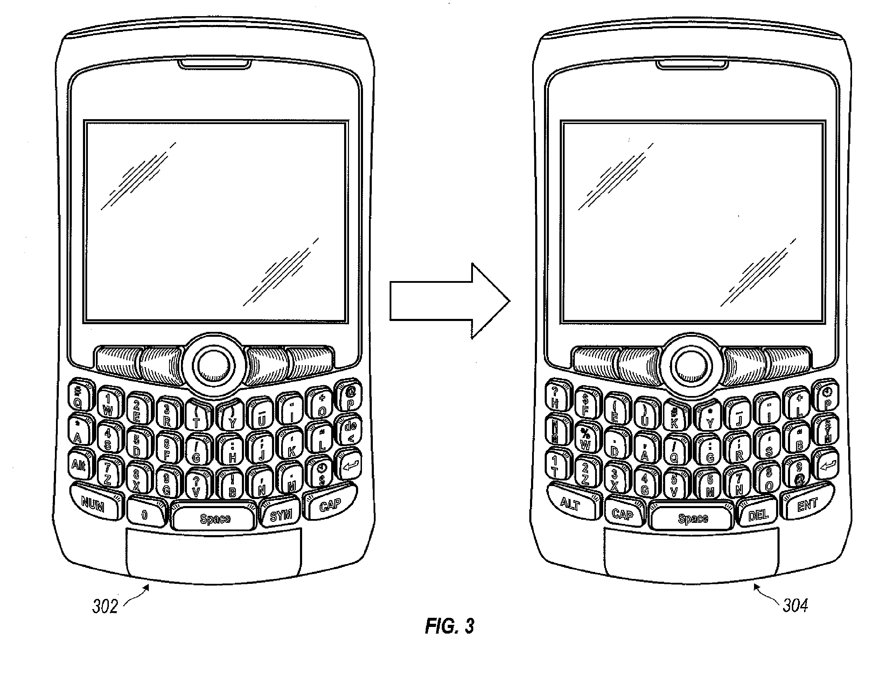

On the other hand, unconstrained optimization results in a large search space, and the output is an optimized keypad layout with respect to usability and ergonomic criteria. Figure 3 shows an exemplary keypad layout 302 for the handheld electronic device. In an unconstrained optimization of the keypad 304, the location of all the keys with alphabets, numbers or other keys has been altered.

In the initial generation of keypad solutions 112, character arrangements are randomized subject to any constraints. For example, uniform probabilities can be used so that all arrangements satisfying the constraints are equally likely. As mentioned above, the constraints can be defined by the user of the method or a keyboard designer. When generating solutions, the constraints can be enforced using formulas or by the designer selecting only those solutions which fit the constraints for further optimization and or reproduction.

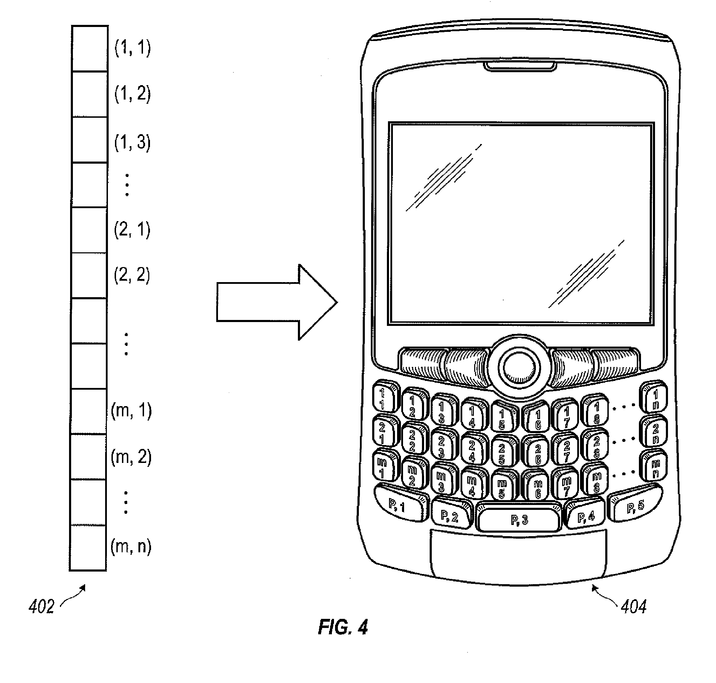

Figure 4 shows an exemplary representation 402 for a keypad solution, where this representation 402 is suitable for subsequent optimization as discussed below. In this case there are N keys on the handheld keypad 404, where each key is located in the i-th row and j-th column. We generated an array of N cells where each cell represents one key location on the keypad. Each cell can contain one or more characters that are stored row-wise in the representation 402, which can be considered as a one-dimensional vector or a two-dimensional array (e.g., indexed by row and column numbers).

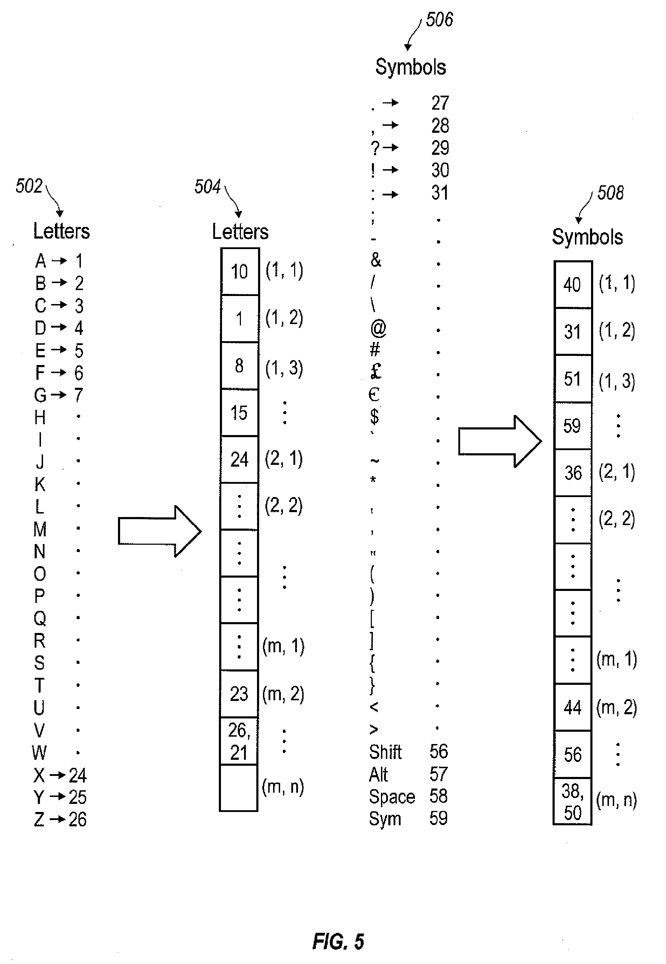

Keypad solutions in this representation 402 can be generated as follows. First, we generate an array with N cells, where N is the total number of keys on the keypad. Each cell can contain one or more characters, and each character can be represented by a unique number. For example, Figure 5 shows an example where the characters include letters and symbols. The letters 502 are identified with numbers one through twenty-six and the symbols 504 are identified with numbers twenty-seven through fifty-nine. In this case, for ease of understanding, separate arrays are shown for the cell entries corresponding to letters 506 and symbols 508. For example the cell indexed as (1,2) contains identification number "1" (for letter "A") and identification number "51" (for symbol ":"). For the case where there are no keypad constraints, the array entries 506, 508 can be generated randomly. For example, characters can be randomly added to empty cells until each cell has one character, and then characters can be randomly added to cells with one character until each cell has two characters, etc. Uniform probabilities can be used to avoid biases.

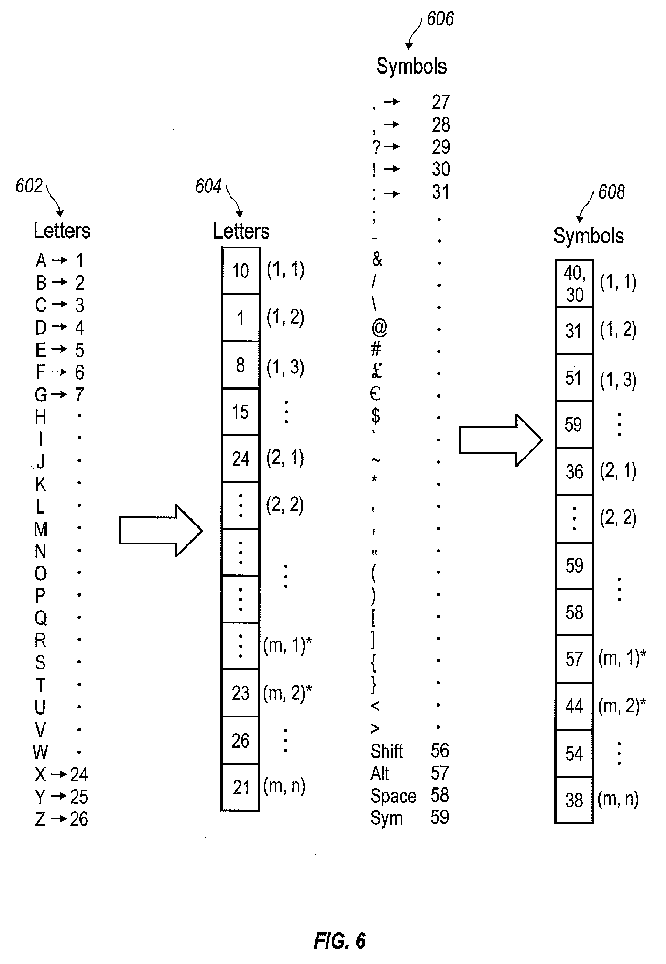

With this representation, we can easily impose any constraint on the keypad solution generation process. For example, we can limit the number of alphabetical characters to one and number of symbols to two. Other constraints can also be applied such as limiting the total of characters on each key to three, or preventing duplication of characters on one keypad solution. An example of constrained keypad solution is depicted in Figure 6, which shows the same numerical identification for letters 602 and symbols 604 as in Figure 5. However, constraints are imposed for the arrays of cells that contain the letters 606 and the symbols 608. The cells which are distinguished by * should only contain one character and the character is predefined, e.g. Space or Alt. Subject to the given constraints, uniform probabilities can be used in the selection process to avoid biases. However, non-uniform probabilities can also be used.

## Generating New Keypad Solutions

The generation of new keypad solutions can be achieved using a variety of different techniques. For example, optimization/search techniques can include a genetic algorithm, simulated annealing, tabu search, and hill climbing, among others. While these techniques are considered within the scope of the invention, the examples and details are presented herein as related to the genetic algorithm.

In certain preferred embodiments, features of genetic algorithms are used to generate the additional keypad solutions 120. In many applications, and especially for cases where structural features are difficult to model, genetic algorithms have provided an effective search approach (e.g., for optimization). For example, in a typical implementation of a genetic algorithm, an initial population of possible character arrangement solutions is first generated. Then, the initial solutions are explored and based on some predefined criteria (e.g., fitness criteria) the best solutions among the existing ones are selected. By combining these solutions, more effective and efficient character arrangement solutions are generated. These steps are then repeated several times until the termination criteria are met.

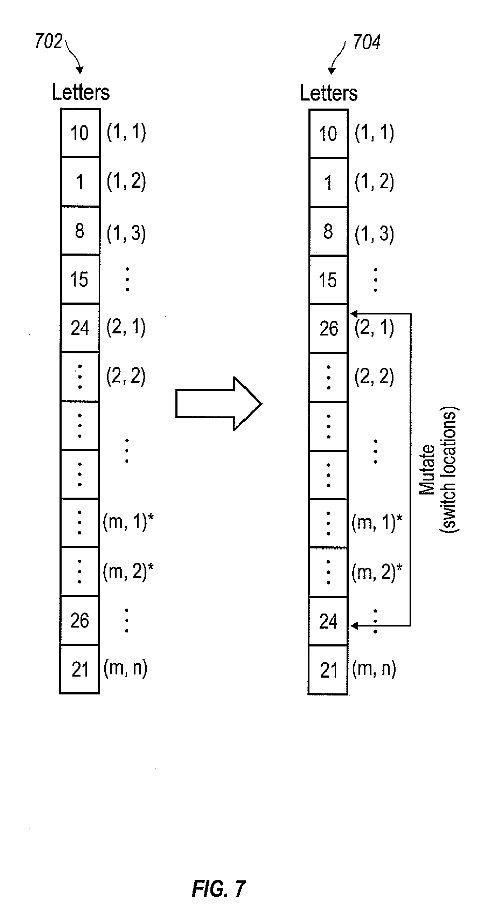

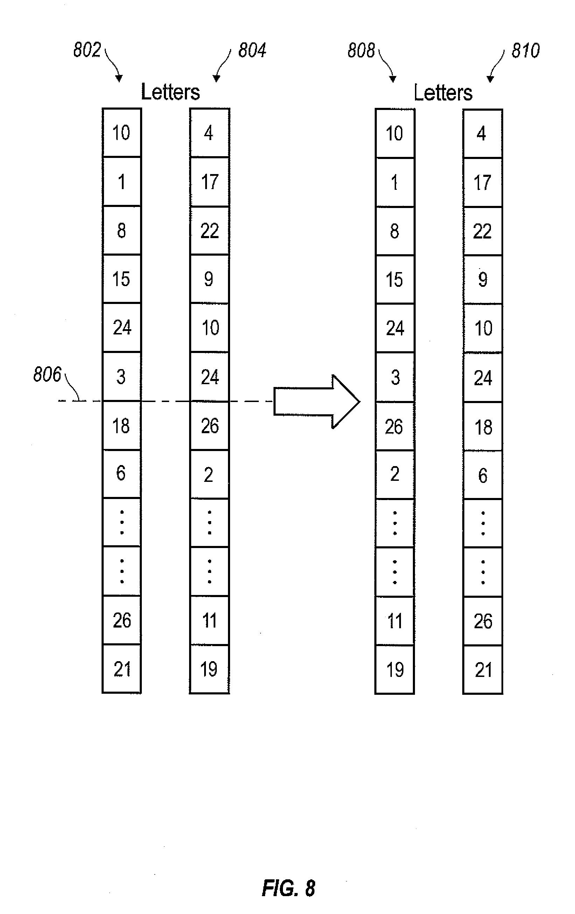

As illustrated in Figures 7 and 8 for exemplary cases, additional solutions can be generated by mutation and crossover operations. Mutation is the process of randomly altering the solution array cell. Crossover is a process of exchanging the cells between the two individual solutions that are selected for reproduction. While cross-over may be based on randomly selected cells, in at least one embodiment the cells selected for crossover are those that have the highest chance for improvement. Since these additional solutions must also satisfy the constraints 108, generated solutions should be tested against the constraints, and any solutions not satisfying the constraints should be discarded.

Figure 7 shows an initial array 702 (for letters only) where the mutation operation results in a switching of the cell entries for cells (2,1) and (m, n-1) to form an additional array 704. Cell numbers for switching can be determined randomly.

Figure 8 shows two initial arrays 802, 804 (for letters only) where the crossover operation results in a switching of cell entries below a crossover threshold 806 to form two additional arrays 808, 810. The crossover threshold 806 can be determined randomly. Alternative crossover operations are possible including, for example, n-point crossover, half uniform crossover, uniform crossover, and cut-and-splice crossover.

## Evaluating Fitness of Solutions

Fitness is a measure of the "goodness" of a keypad solution, that is, a measure of how well the solution fits the search space, or solves the problem at hand. An exemplary fitness function (alternatively, an objective function, evaluation function, or other function as required by a given optimization scheme) is given as

$$F = \frac{\displaystyle\sum_{j=1}^{n}\sum_{i=1}^{p}\sum_{k=1}^{s} \frac{w_{ij} \times C_{k,frequency}}{s}}{N}, \qquad (1)$$

where N is the total number of keys on the keypad, $w_{ij}$ is the total number of muscle activation for a key located in row $i$ and column $j$, $p$ is the total number of rows, $n$ is the total number of columns, $s$ is the number of characters (or symbols) on a key, and $C_{k,frequency}$ is the frequency of the usage for each character. For this fitness function, lower values of F denote better keypad solutions.

Parameters (such as weights) can be adjusted in order to achieve the desired ergonomic considerations. For example, the ergonomic consideration as presented herein is focused on reducing stress and injury to the user's hands, specially the thumbs. We can achieve different solutions by adjusting the weights in Eq. (1). We can set $w_{ij}$ to a large or a small value to set priorities. $w_{ij}$ can be a constant, assigning equal weights to all the eight muscle discussed in Section 4, or can be a function:

$$w_{ij} = \sum_{t=1}^{M} m_{t,ij} \qquad (2)$$

where $m_{t,ij}$ is the weight assigned to muscle $t$, and $M$ is total number of muscles activated with thumb movement for a key located in row $i$ and column $j$.

The above described weight assigned to the muscles can be base on ergonomic considerations, which have become increasingly important for evaluating devices that require hands-on operation. During any thumbing process a human makes use of up to 8 different muscles, each of these muscle serves a separate purpose and may be put into different categories. (1)Extensors including Extensor Pollicis Longus and Extensor Pollicis Brevis; (2) Flexors including Flexor Pollicis Longus and Flexor Pollicis Brevis; (3)Adductors including Adductor Pollicis; (4) Abductors including Abductor Pollicis Longus and Abductor Pollicis Brevis; and (5) other categories including Opponens Pollicis.

The majority of these muscles are located in the forearm and the muscles are enervated by different nerves of the upper body. The activation of each muscle is equivalent to the direction of travel of the thumb.

The most used measure of human muscle activation is the EMG (electromyography) which measures the electrical activities of the muscles and provides energy distribution overtime. This measure can be used to determine the length of the contraction as well as the state of the muscle. Furthermore, a strain gauge can be used to numerically determine the load on the individual muscles.

The optimization of the biomechanics parameters in the design of a handheld device relies on certain measures which are expressed below. The first measure to be use is the kinetics of the thumb movements (Direction, Acceleration). A good understanding of the physical motion of the thumb can define the contraction lengths of the muscle, and the initial activation muscle power required to initiate the motion. These features include: length of the muscle contraction (# of keys (non-linear measure), power requirement (# of keys/s), and action contributors (% of total activation (for each muscle)).

However, reducing the movement to a static position is both, not recommended and unpractical. A static position maintained for an extended period of time has been shown to increase lactic acid build ups in inactive muscle tissue, and a reduction in circulation which may lead to the necrosis of the muscle tissue. Due to this motion, a second measure is required; frequency and time of identical action. Therefore, the frequency of motion must both be minimized.

While the weight can generally be associated with a muscle or other ergonomic factor that is to be quantified, it can be assigned an unrelated value. For instance, if it is desirable to implement particular letters on the keys, such as in a constrained solution, it may be desirable to use these weights to constrain the solutions. For example, the weights can be used to force the keypad solution to retain an alphabetic QWERTY arrangement, such that the alphabetic characters are arranged according to the alphabetic QWERTY arrangement.

Alternative fitness functions are also possible depending on the requirements of the operational setting. For example, as discussed above, one ergonomic goal is minimizing the frequency of an identical motion. To estimate harmfulness of such motions, we define $Q_{ij}$ as following:

$$Q_{ij} = \frac{k_{ij}}{O_{\max}} \qquad (3)$$

where $K_{ij}$ is the frequency that a key in row $i$ and column $j$ is used in one motion and $O_{max}$ is a constant number representing the maximum threshold for frequency of a motion (user defined ergonomic parameters). Then $Q_{ij}$ is evaluated according the following regime,

$$Q_{ij} = \begin{cases} 0 & \text{if } Q_{ij} < 1 \\ Q_{ij} & \text{otherwise} \end{cases}$$

This evaluation implements a lower threshold on the value of $Q_{ij}$ to be used in optimization. Thus, for any value of $Q_{ij}$ less than 1, the value of 1 is assigned to that $Qij$.

Frequency of harmful motions for a keypad solution can be characterized by the following fitness function

$$T = \sum_{j=1}^{n} \sum_{i=1}^{p} Q_{ij} \, . \qquad (4)$$

for this fitness function, lower values of $T$ denote better keypad solutions.

The above functions have been described in terms of a fitness function that is capable of being integrated within the outlined genetic algorithm as presented herein for determining an optimized solution. Alternatively, other similar fitness criteria can be determined and implemented by a user or designer of keypad solutions. These formulas are given as examples of the types of forumulas that can be arranged so that in generating a solution, ergonomic constraints are used. These ergonomic constraints can be quantified through the above fitness functions or others as well. For example, other fitness functions might be derived such that length of movement or extended movement are considered. Additionally, these functions may be integrated into other optimization and/or search techniques such as Simulated Annealing, Tabu search, or Hill Climbing, for example. These fitness functions may be implemented under the corresponding portion of the above mentioned optimization techniques, such as objective functions or the like.

## Usability Tests

Optionally, the keypad solutions generated by the method 102 can then be evaluated for usability based on measured characteristics of user experiences. Usability can be defined as the "extent to which a product can be used by specified users to achieve specified goals with effectiveness, efficiency and satisfaction in a specified context of use."

Key criteria can include efficiency, effectiveness, accuracy, completeness, and satisfaction. Efficiency can be defined as "resources expended in relation to the accuracy and completeness with which users achieve goals." Effectiveness: can be defined as "accuracy and completeness with which users achieve specified goals." Accuracy can be defined as "the extent to which the quality of the output corresponds to the specified criteria" Completeness can be defined as "the proportion of the target quantity which has been achieved." Satisfaction can be defined as "Freedom from discomfort, and positive attitudes towards he use of the product."

Preferably, the detailed usability test plan will specify the context of use as regards to specification of users, environment, equipment, and tasks. Measures related to efficiency, effectiveness, and satisfaction can then be collected. For example, efficiency can be measured by user speed (e.g., whether the average number of words typed per minute with the new keypad is greater or equal to the current keypad). Effectiveness can be measured by user completion (e.g., whether the percentage of users completing a task is greater or equal to the percentage of users completing a task with the current keypad) and user error (e.g., whether the average number of errors made for a sentence while typing with the new keypad is less or equal to typing with the current keypad). Satisfaction can be measured by user ratings (e.g.,

whether a percentage of users rate the new keypad higher than the current keypad on a rating such as the 7-point scale of the After Scenario Questionnaire).

Additional usability measures can be tailored to specific objectives. For example, for learning ability as an objective, effectiveness can be measured by counting the number of functions learned or the percentage of users who satisfy some proficiency measure. Efficiency can be measured by applying the above-described efficiency metrics while the subject is learning. Satisfaction can be measured by a rating for ease of learning.

In these ways the one of the presently described embodiments incorporates measurements of usability derived from user experiences with the above-described method steps for optimizing a fitness criterion 102.

## Alternative Handheld Devices

The above description has focused on embodiments of a handheld electronic device 300 having a full keyboard, only one alphabetic character is associated with each one of a plurality of physical keys. Thus, with an English-language keyboard, there are at least 26 keys in the plurality, one for each letter of the English alphabet. In such embodiments using the English-language alphabet, one of the keyboard layouts described above is usually employed, with the QWERTY keyboard layout being the most common.

In order to further reduce the size of a handheld electronic device 300 without making the physical keys or software keys too small, some handheld electronic devices 300 use a reduced keyboard (such as FIG. 10), where more than one character/command/function is associated with each of at least a portion of the plurality of keys. This results in certain keys being ambiguous since more than one character is represented by or associated with the key, even though only one of those characters is typically intended by the user when activating the key. The method and arrangement for placement of the characters on the keys can likewise be applied to a reduced keyboard arrangement as described herein.

Thus, certain software usually runs on the microprocessor 338 of these types of handheld electronic devices 300 to determine or predict what letter or word has been intended by the user. Predictive text technologies can also automatically correct common spelling errors. Predictive text methodologies often include a disambiguation engine and/or a predictive editor application. This helps facilitate easy spelling and composition, since the software is preferably intuitive software with a large word list and the ability to increase that list based on the frequency of word usage.

The software preferably also has the ability to recognize character letter sequences that are common to the particular language, such as, in the case of English, words ending in "ing." Such systems can also "learn" the typing style of the user making note of frequently used words to increase the predictive aspect of the software. With predictive editor applications, the display of the device depicts possible character sequences corresponding to the keystrokes that were entered. Typically, the most commonly used word is displayed first. The user may select other, less common words manually, or otherwise. Other types of predictive text computer programs may be utilized with the keyboard arrangement and keyboard described herein, without limitation.

The multi-tap method of character selection permits users to enter text using a touch screen device or a conventional telephone key pad such as specified under ITU E 1.161, among other devices. Multi-tap requires a user to press a key a varying number of times, generally within a limited period of time, to input a specific letter, thereby spelling the desired words of the message. A related method is the long tap method, where a user depresses the key until the desired character appears on the display out of a rotating series of letters.

A "text on nine keys"-type system uses predictive letter patterns to allow a user to ideally press each key representing a letter only once to enter text. Unlike multi-tap, which requires a user to indicate a desired character by a precise number of presses of a key or keystrokes, the "text-on-nine-keys" system uses a predictive text dictionary and established letter patterns for a language to intelligently guess which one of many characters represented by a key that the user intended to enter. The predictive text dictionary is primarily a list of words, acronyms, abbreviations, and the like that can be used in the composition of text.

Generally, all possible character string permutations represented by a number of keystrokes entered by a user are compared to the words in the predictive text dictionary and a subset of the permutations is shown to the user to allow selection of the intended character string. The permutations are generally sorted by likelihood of occurrence, which is determined from the number of words matched in the predictive text dictionary and various metrics maintained for these words. Where the possible character string permutations do not match any words in the predictive text dictionary, the set of established letter patterns for a selected language can be applied to suggest the most likely character string permutations, and then require the user to input a number of additional keystrokes in order to enter the desired word.

The keys of reduced keyboards are laid out with various arrangements of characters, commands and functions associated therewith. In regards to alphabetic characters, the different keyboard layouts identified above are selectively used based on a user's preference and familiarity; for example, the QWERTY keyboard layout is most often used by English speakers who have become accustomed to the key arrangement.

FIG. 10 shows a handheld electronic device 300 that carries an example of a reduced keyboard using the QWERTY keyboard layout on a physical keyboard array of twenty keys comprising five columns and four rows. Fourteen keys are used for alphabetic characters and ten keys are used for numbers. Nine of the ten numbers share a key with alphabetic characters. The "space" key and the number "0" share the same key, which is centered on the device and centered below the remainder of the numbers on the keyboard 332. While in other embodiments, the number "0" may be located on other keys. Many of the keys have different sizes than the other keys, and the rows are non-linear. In particular, the keys in the middle column 64 are wider than keys in the outer columns 60, 62, 66 and 68. To readily identify the phone user interface (the second user interface), the numeric phone keys 0-9 include a color scheme that is different from that of the remaining keys associated with the QWERTY key arrangement. As exemplified in FIG. 10, a color scheme of the numeric phone keys has a two tone appearance, with the upper portion of the numeric keys being a first color and the lower portion of the numeric keys being a second color. The first color may be lighter than the second color, or darker than the second color.

As described above, the International Telecommunications Union ("ITU") has established phone standards for the arrangement of alphanumeric keys. The standard phone numeric key arrangement corresponds to ITU Standard E 1.161, entitled "Arrangement of Digits, Letters, and Symbols on Telephones and Other Devices That Can Be Used for Gaining Access to a Telephone Network." This standard is also known as ANSI TI.703-1995/1999 and ISO/IEC 9995-8: 1994. As shown in FIG. 10, the numeric key arrangement can be overlaid on a QWERTY arrangement. The numeric arrangement as shown can be aptly described as a top-to-bottom ascending order three-by-three over zero pattern.

As noted earlier, multi-tap software has been in use for a number of years permitting users to enter text using a conventional telephone key pad such as specified under ITU E 1.161 or on a touch screen display, among other devices. Multi-tap requires a user to press a key a varying number of times, generally within a limited period of time, to input a specific letter associated with the particular key, thereby spelling the desired words of the message. A related method is the long tap method, where a user depresses the key until the desired character appears on the display.

As may be appreciated from FIG. 10, the handheld device 300 comprises a lighted display 322 located above a keyboard 332 suitable for accommodating textual input to the handheld device 300 when in an operable configuration. The front face 370 of the device has a keyfield 650 that includes menu keys 652, alphanumeric keys 630, alphabetic keys 632, numeric keys 42, and other function keys as shown in FIG. 10. As shown, the device 300 is of unibody construction, also known as a "candy-bar" design.

From FIG. 10 it is further evident that a plurality of the keys of the key field are arranged in rows and columns and at least one of the rows and columns is arranged with a long axis thereof substantially radially oriented relative to the trackball navigation tool. A horizontal long axis of the menu keys 606, 608 and telephone call keys 605, 609 substantially intersects a center of the trackball navigation tool 325 thereby establishing a radial orientation of at least a portion of the keys, to the trackball navigation tool 325.

Referring again to FIG. 10, the handheld device 300 is also configured to send and receive voice communications such as mobile telephone calls. At least one key of the key field 650 is positioned adjacent to the trackball navigation tool and that key has a circular arc-shaped edge conformance fitting to a circular arc-shaped boundary about the trackball navigation tool 325. To facilitate telephone calls, two call keys 605, 609 oppositely and laterally flank the trackball navigation tool. One of the two call keys is a call initiation key 605 and the other is a call termination key 609.

### Additional Embodiments

Additional embodiments relate to an apparatus for carrying out any one of the above-described methods, where the apparatus may include a computer for executing computer instructions related to the method. In this context the computer may be a general-purpose computer including, for example, a processor, memory, storage, and input/output devices (e.g., monitor, keyboard, disk drive, Internet connection, etc.). However, the computer may include circuitry or other specialized hardware for carrying out some or all aspects of the method. In some operational settings, the apparatus may be configured as a system that includes one or more units, each of which is configured to carry out some aspects of the method either in software, in hardware or in some combination thereof.

At least some values based on the results of the method can be saved, either in memory (e.g., RAM (Random Access Memory)) or permanent storage (e.g., a hard-disk system) for later use.

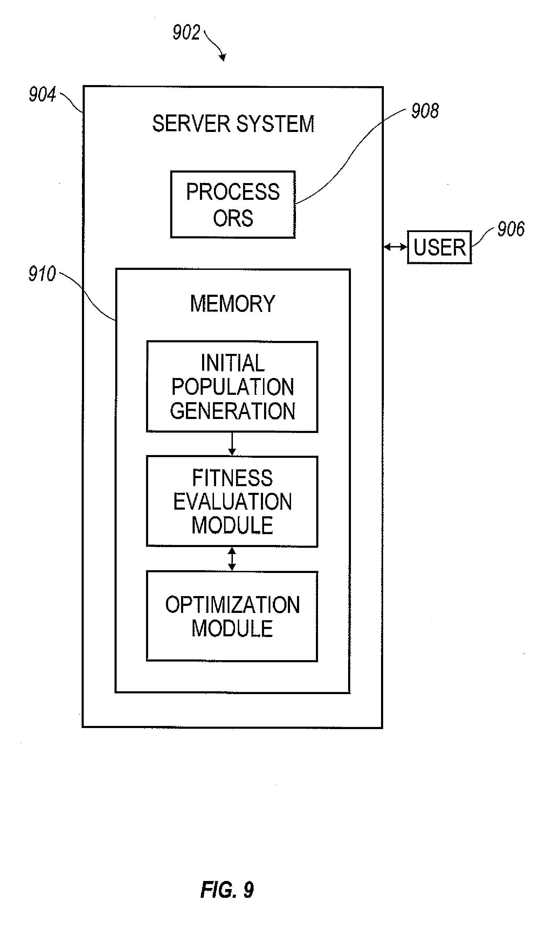

For example, Figure 9 shows an exemplary system 902 that includes a server system 904 and a user interface 906 in communication with the server system 904. The server system 904 includes one or more processors 908 and a memory 910 that typically includes a non-volatile store that contains stored program instructions. In some operational settings, program instructions can be organized into software modules including, for example, an initial population generation module, a fitness evaluation module, and optimization module.

Additional embodiments also relate to a computer-readable medium that stores (e.g., tangibly embodies) a computer program for carrying out any one of the above-described methods by means of a computer. The computer program may be written, for example, in a general-purpose programming language (e.g., C, C++) or some specialized application-specific language. The computer program may be stored as an encoded file in some useful format (e.g.,

binary, ASCII).

Although only certain exemplary embodiments of this disclosure have been described in detail above, those skilled in the art will readily appreciate that many modifications are possible in the exemplary embodiments without materially departing from the novel teachings and advantages of this disclosure. For example, aspects of embodiments disclosed above can be combined in other combinations to form additional embodiments. Accordingly, all such modifications are intended to be included within the scope of this disclosure.

Exemplary embodiments have been described hereinabove regarding both wireless handheld electronic devices, as well as the communication networks within which they cooperate. It should be appreciated, however, that a focus of the present disclosure is the enablement of determination of character value arrangements.

## Claims

1. A method of determining character value arrangement on a handheld keypad, comprising:

   specifying one or more parameters for evaluating keypad solutions for the handheld keypad by characterizing a user's physical operations on the handheld keypad, wherein said keypad comprises a plurality of input keys with which character values are associated, each having at least one alphanumeric indicia associated therewith;
   generating an initial set of keypad solutions for the handheld keypad;
   evaluating a fitness of the keypad solutions in the initial set based on the one or more parameters;
   selecting a first set of keypad solutions from the initial set based on the fitness of the keypad solutions in the initial set;
   generating additional solutions for the first set of keypad solutions from the keypad solutions in the first set;
   evaluating the fitness of the additional keypad solutions in the first set; and
   saving at least some key-associated character values based on the keypad solutions.

2. A method according to claim 1, wherein the one or more parameters include at least one characterization of the user's muscle actuations.

3. A method according to claim 1, wherein the one or more parameters include at least one characterization of the user's repetitive motions.

4. A method according to claim 1, wherein said alphanumeric indicia are arranged in a standard keyboard arrangement.

5. A method according to claim 1, further comprising: determining the one or more parameters for improving an ergonomic performance with less than ten fingers.

6. A method according to claim 1, further comprising:

   determining that an accuracy criterion for the fitness of keypad solutions has been satisfied by an acceptable keypad solution in the first set of the keypad solutions; and
   evaluating a usability criterion for the acceptable keypad solution based on at least one user evaluation, wherein the usability criterion includes a measurement of at least one of efficiency, effectiveness, and satisfaction.

7. A method according to claim 1, further comprising:

   determining that an accuracy criterion for the fitness of keypad solutions has not been satisfied for the first set of the keypad solutions;
   selecting a second set of keypad solutions from the first set of keypad solutions based on the fitness of the keypad solutions in the first set;
   generating additional solutions for the second set of keypad solutions from the keypad solutions in the second set; and
   evaluating the fitness of the additional keypad solutions in the second set.

8. A method according to claim 1, wherein keypad solutions include character values for an arrangement of keys on the handheld keypad.

9. A method according to claim 1, wherein generating the initial set of keypad solutions includes calculating a random placement of character values on the handheld keypad subject to at least some constraints for the character values.

10. A method according to claim 1, further comprising specifying one or more constraints for the keypad solutions, wherein generating the initial set of the keypad solutions includes enforcing the one or more constraints, and generating the additional solutions for the first set of keypad solutions includes enforcing the one or more constraints.

11. A method according to claim 10, wherein the one or more constraints include at least one pre-defined location for at least one character.

12. A method according to claim 1, wherein generating the additional solutions for the first set of keypad solutions includes at least one of:

selecting a pair of solutions from the first set, and generating at least one additional solution for the first set by carrying out a permutation operation on the selected pair to switch at least one entry between the selected pair; and
selecting a solution from the first set, and generating at least one additional solution for the first set by carrying out a mutation operation on the selected solution to switch at least one entry within the selected solution.

13. An apparatus for determining character value arrangement on a handheld keypad, the apparatus comprising a computer for executing computer instructions, wherein the computer includes computer instructions for:

specifying one or more parameters for evaluating keypad solutions for the handheld keypad by characterizing a user's physical operations on the handheld keypad, wherein said keypad comprises a plurality of input keys with which character values are associated and of which more than ten are alphanumeric keys, each having at least one alphanumeric indicia associated therewith;
generating an initial set of keypad solutions for the handheld keypad;
evaluating a fitness of the keypad solutions in the initial set based on the one or more parameters;
selecting a first set of keypad solutions from the initial set based on the fitness of the keypad solutions in the initial set;
generating additional solutions for the first set of keypad solutions from the keypad solutions in the first set;
evaluating the fitness of the additional keypad solutions in the first set; and
saving at least some key-associated character values based on the keypad solutions.

14. An apparatus according to claim 13, wherein the one or more parameters include at least one characterization of the user's muscle actuations.

15. An apparatus according to claim 13, wherein the one or more parameters include at least one characterization of the user's repetitive motions.

16. An apparatus according to claim 13, wherein the computer includes a processor with memory for executing at least some of the computer instructions.

17. An apparatus according to claim 13, wherein the computer includes circuitry for executing at least some of the computer instructions.

18. A computer-readable medium that stores a computer program for determining character value arrangement on a handheld keypad, wherein the computer program includes instructions for:

specifying one or more parameters for evaluating keypad solutions for the handheld keypad by characterizing a user's physical operations on the handheld keypad, wherein said keypad comprises a plurality of input keys with which character values are associated and of which more than ten are alphanumeric keys, each having at least one alphanumeric indicia associated therewith;
generating an initial set of keypad solutions for the handheld keypad;
evaluating a fitness of the keypad solutions in the initial set based on the one or more parameters;
selecting a first set of keypad solutions from the initial set based on the fitness of the keypad solutions in the initial set;
generating additional solutions for the first set of keypad solutions from the keypad solutions in the first set;
evaluating the fitness of the additional keypad solutions in the first set; and

saving at least some key-associated character values based on the keypad solutions.

102

104

106 — Start ← Input

108 — Evaluate and implement the constraints

110 — Generate weight values $w_{ij}$

112 — Generate initial population of keypad solution

114 — Evaluate fitness for each solution

118 — End ← **Yes** 116 — Optimal or "good" solution found ?

**No**

120 — Reproduce new solutions and delete the old ones

*FIG. 1*

**FIG. 2**

EP 2 017 695 A1

**FIG. 3**

EP 2 017 695 A1

(1, 1)

(1, 2)

(1, 3)

⋮

(2, 1)

(2, 2)

⋮

⋮

(m, 1)

(m, 2)

⋮

(m, n)

402

404

**FIG. 4**

/506

Symbols

. → 27
, → 28
? → 29
! → 30
: → 31
;
-
&
/
\
@
#
£
€
$
'
~
*
'
'
"
(
)
[
]
{
}
<
>
Shift    56
Alt     57
Space   58
Sym     59

/502

Letters

A → 1
B → 2
C → 3
D → 4
E → 5
F → 6
G → 7
H
I
J
K
L
M
N
O
P
Q
R
S
T
U
V
W
X → 24
Y → 25
Z → 26

/504

Letters

| 10 | (1, 1) |
| 1 | (1, 2) |
| 8 | (1, 3) |
| 15 | ⋮ |
| 24 | (2, 1) |
| ⋮ | (2, 2) |
| ⋮ | ⋮ |
| ⋮ | ⋮ |
| ⋮ | (m, 1) |
| 23 | (m, 2) |
| 26, 21 | ⋮ |
| | (m, n) |

/508

Symbols

| 40 | (1, 1) |
| 31 | (1, 2) |
| 51 | (1, 3) |
| 59 | ⋮ |
| 36 | (2, 1) |
| ⋮ | (2, 2) |
| ⋮ | ⋮ |
| ⋮ | ⋮ |
| ⋮ | (m, 1) |
| 44 | (m, 2) |
| 56 | ⋮ |
| 38, 50 | (m, n) |

**FIG. 5**

/ 606

**Symbols**

| | |
|---|---|
| . → | 27 |
| , → | 28 |
| ? → | 29 |
| ! → | 30 |
| : → | 31 |

602

**Letters**

| | |
|---|---|
| A → | 1 |
| B → | 2 |
| C → | 3 |
| D → | 4 |
| E → | 5 |
| F → | 6 |
| G → | 7 |
| H | • |
| I | • |
| J | • |
| K | • |
| L | • |
| M | • |
| N | • |
| O | • |
| P | • |
| Q | • |
| R | • |
| S | • |
| T | • |
| U | • |
| V | • |
| W | • |
| X → | 24 |
| Y → | 25 |
| Z → | 26 |

604

**Letters**

| | |
|---|---|
| 10 | (1, 1) |
| 1 | (1, 2) |
| 8 | (1, 3) |
| 15 | ⋮ |
| 24 | (2, 1) |
| ⋮ | (2, 2) |
| ⋮ | ⋮ |
| ⋮ | (m, 1)* |
| 23 | (m, 2)* |
| 26 | ⋮ |
| 21 | (m, n) |

Symbols (606 column)

```
.
,
?
!
:
;
–
&
/
\
@
#
£
€
$
'
~
*
'
,
"
(
)
[
]
{
}
<
>
Shift   56
Alt     57
Space   58
Sym     59
```

608

**Symbols**

| | |
|---|---|
| 40, 30 | (1, 1) |
| 31 | (1, 2) |
| 51 | (1, 3) |
| 59 | ⋮ |
| 36 | (2, 1) |
| ⋮ | (2, 2) |
| 59 | ⋮ |
| 58 | |
| 57 | (m, 1)* |
| 44 | (m, 2)* |
| 54 | ⋮ |
| 38 | (m, n) |

*FIG. 6*

702 ↘

704 ↗

**Letters**

| 10 | (1, 1) |
| 1 | (1, 2) |
| 8 | (1, 3) |
| 15 | ⋮ |
| 24 | (2, 1) |
| ⋮ | (2, 2) |
| ⋮ | ⋮ |
| ⋮ | ⋮ |
| ⋮ | (m, 1)* |
| ⋮ | (m, 2)* |
| 26 | ⋮ |
| 21 | (m, n) |

⟹

**Letters**

| 10 | (1, 1) |
| 1 | (1, 2) |
| 8 | (1, 3) |
| 15 | ⋮ |
| 26 | (2, 1) |
| ⋮ | (2, 2) |
| ⋮ | ⋮ |
| ⋮ | ⋮ |
| ⋮ | (m, 1)* |
| ⋮ | (m, 2)* |
| 24 | ⋮ |
| 21 | (m, n) |

Mutate
(switch locations)

*FIG. 7*

802    804         808    810

Letters                Letters

| 10 | 4 |     | 10 | 4 |
|----|----|     |----|----|
| 1 | 17 |     | 1 | 17 |
| 8 | 22 |     | 8 | 22 |
| 15 | 9 |     | 15 | 9 |
| 24 | 10 |    | 24 | 10 |
| 3 | 24 |     | 3 | 24 |
| 18 | 26 |    | 26 | 18 |
| 6 | 2 |      | 2 | 6 |
| ⋮ | ⋮ |      | ⋮ | ⋮ |
| ⋮ | ⋮ |      | ⋮ | ⋮ |
| 26 | 11 |    | 11 | 26 |
| 21 | 19 |    | 19 | 21 |

806

**FIG. 8**

902

904

SERVER SYSTEM

908

PROCESS ORS

USER  906

910

MEMORY

INITIAL POPULATION GENERATION

FITNESS EVALUATION MODULE

OPTIMIZATION MODULE

**FIG. 9**

**FIG. 10**

**FIG. 11**

EP 2 017 695 A1

**European Patent Office**

## EUROPEAN SEARCH REPORT

Application Number

EP 07 11 2472

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | The technical aspects identified in the present application (Art. 92 EPC) are considered part of common general knowledge. Due to their notoriety no documentary evidence is found to be required. For further details see the accompanying Opinion and the reference below. XP002456252 | 1-18 | INV. G06F3/02 |

TECHNICAL FIELDS SEARCHED (IPC)

G06F

The present search report has been drawn up for all claims

| Place of search | Date of completion of the search | Examiner |
|---|---|---|
| The Hague | 17 January 2008 | RUSSO DOS SANTOS, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)